# EUROPEAN PATENT APPLICATION

(11) **EP 4 707 316 A1**
(43) Date of publication of application: **11.03.2026**
(21) Application number: 24905104.6
(22) Date of filing: 29.09.2024
(51) Int. Cl.: C08F 251/00, C08F 285/00, C11D 3/22, C08B 31/00, C08B 37/00, C08B 37/02, C08B 37/08

(54) **BIOPOLYSACCHARIDE-BASED POLYMER AND PREPARATION METHOD THEREFOR AND USE THEREOF**

(30) Priority: 24.07.2024 CN 202410998929
(71) Applicant: All-Plus Chemical Co., Ltd., Nanjing, Jiangsu 210000 (CN)
(72) Inventor: CHEN, Jiabao, Nanjing, Jiangsu 210009 (CN); WANG, Jianmin, Nanjing, Jiangsu 210009 (CN)
(74) Representative: Cullinane, Marietta Bettina
(86) International application number: PCT/CN2024/122496
(87) International publication number: WO 2026/020588

(57) **Abstract**

Provided is a bio-polysaccharide-based polymer as well as a preparation method therefor and a use thereof, which relates to the technical field of polymers. According to the preparation method, a polysaccharide material, a first monomer and a first oxidant in proportion are added for reaction, so as to obtain a first mixed system; an alcohol solvent is added into the first mixed system for reaction, so as to obtain a second mixed system; a second monomer and a second oxidant are added into the second mixed system for reaction, so as to obtain a third mixed system; a temperature-raising reaction is performed on the obtained third mixed system, so as to obtain the bio-polysaccharide-based polymer. The bio-polysaccharide-based polymer is prepared from phosphorus-free and safe raw materials, possesses biodegradability as well as other functional properties, demonstrating resistance to hard water, good dispersing ability for various types of inorganic scales, iron oxides as well as kaolinite, thus making it suitable for making cleaning agents. The whole preparation process is safe and environmentally friendly, and easier to control, thus easily realizing industrial production.

## Description

### CROSS-REFERENCE TO RELATED APPLICATION

The present invention claims the priority to the Chinese patent application No. 202410998929.1 filed on July 24, 2024 and entitled "BIO-POLYSACCHARIDE-BASED POLYMER AS WELL AS PREPARATION METHOD THEREFOR AND USE THEREOF", the contents of which are incorporated herein by reference in entirety.

### TECHNICAL FIELD

The present invention relates to the technical field of polymers, in particular to a bio-polysaccharide-based polymer as well as a preparation method therefor and a use thereof.

### BACKGROUND

The high hardness of tap water is due to the presence of elevated levels of metal ions such as calcium and magnesium. These ions readily form various insoluble substances under specific conditions, which easily adhere to the surfaces of utensils or clothes, making it more difficult to maintain cleanliness.

It has always been the case that the phosphorus-containing salts, such as sodium tripolyphosphate and tetrasodium hydroxyethylidene diphosphonate (HEDP), have demonstrated excellent chelating effects on calcium, magnesium ions, and inorganic scale in water, effectively removing such insoluble substances. However, phosphorus is one of the major contributors to water eutrophication, making the pressure of environmental protection more and more serious. The existing formulations have shifted to alternatives such as sodium citrate, EDTA, combining them with polymeric dispersants to achieve the effect of cleaning insoluble substances, so as to mitigate the pressure of environmental protection.

In the current market, polymeric dispersants, represented by polyacrylic acid homopolymer or copolymer, are all petroleum-based raw materials. They are difficult to degrade and prone to accumulating in the natural environment, non-renewable and non-degradable, ultimately impacting the environment. In addition, the polymerization control process for dispersant with petroleum-based raw materials presents certain challenges.

In view of this, the present invention is proposed.

### SUMMARY

The objective of the present invention is to provide a bio-polysaccharide-based polymer as well as a preparation method therefor and the use thereof, so as to solve the above technical problems.

The present invention is realized by the following.

In the first aspect, a preparation method for a bio-polysaccharide-based polymer is provided in the example of the present invention, including the following steps:
reacting the polysaccharide material, the first monomer and the first oxidant at a reaction temperature of 55-80°C for 1-4h to obtain a first mixed system; adding an alcohol solvent into the first mixed system for reaction at a reaction temperature of 55-80°C for 5-30min to obtain a second mixed system; adding a second monomer and a second oxidant into the second mixed system for reaction at a reaction temperature of 60-80°C with the adding duration of 2-6h, so as to obtain a third mixed system; performing a temperature-raising reaction on the third mixed system, so as to obtain a bio-polysaccharide-based polymer.

According to parts by mass, the usage ratio of polysaccharide material, first monomer and first oxidant is (50-120): (10-80): (0.1-5); the usage ratio of the second monomer and the second oxidant is (30-150): (1-20).

The temperature-raising reaction includes a first temperature-raising reaction and a second temperature-raising reaction, wherein the reaction temperature of the first temperature-raising reaction is 85-90°C, and the duration is 2-6h; the reaction temperature of the second temperature-raising reaction is 90-105°C and the duration is 0.5-2.5h.

In the second aspect, a bio-polysaccharide-based polymer is provided in the example of the present invention, wherein the bio-polysaccharide-based polymer is prepared by the aforementioned preparation method.

In the third aspect, a cleaning agent is provided in the example of the present invention, wherein the cleaning agent includes a bio-polysaccharide-based polymer prepared by the aforementioned preparation method or the aforementioned bio-polysaccharide-based polymer.

The present invention has the following beneficial effects.

According to the preparation method of the bio-polysaccharide-based polymer in the present invention, the polysaccharide material, the first monomer and the first oxidant are reacted, so as to obtain the first mixed system; the alcohol solvent is added into the first mixed system for reaction, so as to obtain the second mixed system; the second monomer and the second oxidant are added into the second mixed system for reaction, so as to obtain the third mixed system; and the temperature-raising reaction is performed on the obtained third mixed system, so as to obtain the bio-polysaccharide-based polymer. The raw materials used are diverse saccharides as substrates so that the ultimately prepared bio-polysaccharide-based polymer is not only phosphorus-free and safe, but also possesses biodegradability as well as other functional properties. These functional properties are mainly manifested in the resistance to hard water, good dispersing ability for various types of inorganic scales, iron oxides, as well as kaolinite, making it suitable for use in the production of cleaning agents. The present preparation method belongs to a novel preparation process. In the present method, a unique dual-initiation mode and an alcohol-water environment are employed, and a one-pot method is adopted for synthesis, so that no waste liquid, waste residue, or waste gas is generated. The whole preparation process is safe, environmentally friendly, and easier to control, thus easily realizing industrial production.

### BRIEF DESCRIPTION OF THE DRAWINGS

In order to more clearly illustrate the technical solutions of examples in the present invention, the drawing to be used in the examples will be briefly introduced below. It should be understood that the following drawing only shows some examples of the present invention, so they should not be regarded as limiting the scope, for a person of ordinary skill in the art, other drawings can be obtained according to the drawing without inventive efforts.
FIG. 1 is a schematic diagram of the test results of the polymer's resistance to hard water.
FIG. 2 is a schematic diagram of the test results of the polymer's inhibition rate to calcium carbonate scale.
FIG. 3 is a schematic diagram of the test results of the polymer's inhibition rate to calcium silicate scale.

### DETAILED DESCRIPTION OF EMBODIMENTS

In order to make the objectives, technical solutions and advantages of the examples of the present invention clearer, the technical solutions in the examples of the present invention will be described clearly and completely below. Where specific conditions are not specified in the examples, it shall be carried out according to the conventional conditions or the conditions suggested by the manufacturer. The reagents or instruments used without indicating the manufacturer are conventional products that can be obtained through commercially available purchase.

In recent years, the detergent industry has been advocating for green cleaning. In response to market trends, the inventors independently developed a non-toxic, phosphorus-free, and biodegradable polymer. This polymer is synthesized by taking diverse saccharides as substrates through a dual-initiation mode in an alcohol-water solvent environment, with the introduction of hydrophilic and hydrophobic monomers. The polymer exhibits strong hard water resistance and excellent dispersing effects on various inorganic calcium scales, iron oxide, and kaolinite, showing potential to replace existing acrylic acid homopolymers or copolymers in the detergent industry. Specific details are as follows.

In the first aspect, a preparation method for the bio-polysaccharide-based polymer is provided in the example of the present invention, including the following steps:
reacting the polysaccharide material, the first monomer and the first oxidant at a reaction temperature of 55-80°C for 1-4h to obtain a first mixed system; adding an alcohol solvent into the first mixed system for reaction at a reaction temperature of 55-80°C for 5-30min to obtain a second mixed system; adding a second monomer and a second oxidant into the second mixed system for reaction at a reaction temperature of 60-80°C with the adding duration of 2-6h to obtain a third mixed system; performing a temperature-raising reaction on the third mixed system, so as to obtain a bio-polysaccharide-based polymer. According to parts by mass, the usage ratio of polysaccharide material, first monomer and first oxidant is (50-120): (10-80): (0.1-5); the usage ratio of the second monomer and the second oxidant is (30-150): (1-20). The temperature-raising reaction includes a first temperature-raising reaction and a second temperature-raising reaction, wherein the reaction temperature of the first temperature-raising reaction is 85-90°C, and the duration is 2-6h; the reaction temperature of the second temperature-raising reaction is 90-105°C and the duration is 0.5-2.5h.

In an optional embodiment of the present invention, the polysaccharide material is selected from at least one of polysaccharides and/or polysaccharide derivatives, wherein the polysaccharide is selected from at least one of starch, cellulose, guar gum, Arabic gum, tamarind gum, chitosan and dextrin, and the polysaccharide derivative is selected from at least one of hydroxypropyl starch, carboxymethyl starch, hydroxypropyl cellulose and carboxymethyl guar gum.

It should be noted that the polysaccharide material is a natural organic polymer with wide sources, renewable, environmentally friendly, non-toxic, pollution-free, degradable and low price, so that it is a biological raw material with high-cost performance. Additionally, the polysaccharide belongs to a glucoside so that it can be hydrolyzed. During the hydrolysis process, a series of intermediate products are often produced, and ultimately, the monosaccharide is obtained by complete hydrolysis. That is to say, the polysaccharide is a degradable substance. The polysaccharide derivative refers to a product obtained through chemical or biological modification or transformation of the polysaccharide. The derivative retains the fundamental characteristics of the polysaccharide while exhibiting improved solubility, stability, or bioactivity. By introducing diverse hydrophilic/hydrophobic groups, the polysaccharide derivative can achieve functional diversity while maintaining biodegradability. Therefore, the polymer prepared by using polysaccharide-based or polysaccharide derivative-based materials also possesses degradability.

The first monomer is selected from at least one of maleic acid, maleic anhydride, fumaric acid and itaconic acid.

It should be noted that the active monomers selected in the present invention belong to monomers with relatively weak activity, and the introduction of such monomers in the reaction system is helpful to make the reaction substances have higher reaction activity, better controllability and higher selectivity in the reaction process. In other embodiments of the present invention, other types of active monomers can be selected according to actual needs, and the strength of activity needs to be selected according to the properties of reactants.

Further, the polysaccharide material and the first monomer are added into the reaction equipment according to the proportion, and then 100-300 parts of water are added, and nitrogen is introduced for uniform mixing, so that the system is mixed in an oxygen-free or oxygen-deficient environment. The temperature in the mixing process is 55-80°C, and the duration is ≥0.5h, until the mixed system is clarified, transparent and particle-free, so as to ensure the full mixing of substances. In this process, the duration can be reasonably adjusted according to the actual amount of raw materials to be processed.

Then, 0.1-5 parts of the first oxidant are added for reaction at a reaction temperature of 55-80°C with a duration of 1-4 h, so as to obtain a first mixed system.

In an optional embodiment of the present invention, the first oxidant is a metal salt, wherein the metal ion of the first oxidant is selected from at least one of Fe²⁺, Fe³⁺, Ti³⁺, Zr³⁺, Cr³⁺ and Ce⁴⁺.

It should be noted that metal salts are soluble salts, including but not limited to any one or more of FeCl₃, TiCl₃, ZrCl₃, CrCl₃, CeCl₄, (NH₄)₂Ce(NO₃)₆ (ceric ammonium nitrate) and (NH₄)₂Fe(SO₄)₂-6H₂O (ammonium ferrous sulfate). In other embodiments of the present invention, other soluble metal salts can be selected according to actual needs and the types and properties of substances participating in the reaction.

The addition of metal ions mainly serves as an initiator to trigger or accelerate the reaction, and they will not be consumed or change the final state of the reaction. The selection and use of initiators significantly influence the success of chemical reactions, reaction rates, and product properties. They directly affect whether the polymerization process can proceed smoothly, as well as the polymerization rate and the product's storage life.

In an optional embodiment of the present invention, an alcohol solvent is added into the first mixed system for reaction at a reaction temperature of 55-80°C with a duration of 5-30min, so as to obtain a second mixed system. The specific reaction duration can be reasonably adjusted according to the amount of materials to be processed.

Further, the usage of alcohol solvent is 5-50 parts. The alcohol solvent is selected from at least one of methanol, ethanol, isopropanol, n-butanol and tert-butanol. In other embodiments of the present invention, the types of alcohol solvents can be reasonably adjusted according to actual needs.

It should be noted that the alcohol-water reaction environment is conducive to enhancing the solubility of substances in the reaction system and realizing the controllable operation of the reaction. In addition, the alcohol solvent has the characteristics of low toxicity, no corrosiveness and easy availability, and the solvent can be treated for recycling after the reaction, causing minimal environmental pollution. Through the alcohol-water reaction environment, together with degradable reaction raw materials, a non-toxic and pollution-free product is expected to be produced, thereby alleviating the pressure on environmental protection.

In addition, the alcohol solvent possesses weak reducibility, and the reduction system provided by it, along with the addition of alcohol solvent in the first mixed system, can effectively control the polymerization reaction of polysaccharide material with the first monomer and the second monomer, thereby properly controlling the polymerization degree.

In an optional embodiment of the present invention, the second monomer and the second oxidant are added into the second mixed system to react at a reaction temperature of 60-80°C with the adding duration of 2-6 h, so as to obtain a third mixed system.

Further, the second monomer is selected from at least one of hydrophilic monomer and/or hydrophobic monomer, wherein the hydrophilic monomer is selected from at least one of acrylic acid, AMPS sulfonic acid, acrylamide and hydroxyethyl acrylate, and the hydrophobic monomer is selected from at least one of vinyl acetate, n-butyl acrylate, allyl glycidyl ether, styrene and lauryl acrylate. In other embodiments of the present invention, the types of hydrophilic monomers and/or hydrophobic monomers can be reasonably selected according to actual needs, and other substances can be appropriately adjusted for use.

It should be noted that the addition of hydrophilic monomers and/or hydrophobic monomers can enhance the dissolution intensity of the reactants and the reaction rate between them, improving the dispersibility of the final product.

The second oxidant is peroxide. Further, it is persulfate. The persulfate includes, but is not limited to, any one of potassium persulfate, sodium persulfate, ammonium persulfate, potassium persulfate and ammonium persulfate, potassium persulfate and sodium persulfate, or ammonium sulfate and sodium persulfate. In other embodiments of the present invention, the types of peroxides can be reasonably selected according to actual needs, and other substances can be appropriately adjusted for use.

It should be noted that the peroxides decompose to produce oxygen free radicals during the reaction, wherein the produced oxygen free radicals are highly reactive and can promote the progress of the polymerization reaction, as well as enhance the performance of the product by promoting intermolecular cross-linking reactions.

In the preferred embodiments of the present invention, the second monomer and the second oxidant are simultaneously added to the second mixed system for polymerization. Further, the usage ratio of the second monomer to the second oxidant is (30-150): (1-20). Furthermore, the addition rates of the second monomer and the second oxidant are reasonably adjusted and controlled according to their usage. In the embodiment of the present invention, the constant-speed addition is selected in the form of dropping. In other embodiments of the present invention, other equipment can further be selected for constant-speed addition. The way of rapid addition or strand inflow is avoided, as this way the localized concentration of the system materials increases instantly, leading to uneven reactions and affecting the final product.

A temperature-raising reaction is performed on the third mixed system, wherein the temperature-raising reaction includes a first temperature-raising reaction and a second temperature-raising reaction. The reaction temperature of the first temperature-raising reaction is 85-90°C, and the duration is 2-6h, and the reaction temperature of the second temperature-raising reaction is 90-105°C and the duration is 0.5-2.5h, so as to obtain the bio-polysaccharide-based polymer.

It should be noted that during the temperature-raising reaction of the third mixed system, the treatment of distillation is performed to recover the distillate, while simultaneously increasing the stirring speed to accelerate the distillation and recovery rate.

In an optional embodiment of the present invention, when the material temperature of the third mixed system reaches ≥94°C and the mass of the collected distillate exceeds the amount of added alcohol solvent, the reaction is terminated. It should be noted that this operation aims to maximize or completely volatilize the alcohol solvent, so as to ensure the product purity.

Further, when the material temperature of the third mixed system is <50°C, the pH of the third mixed system is adjusted to 4.0-5.0, so as to obtain the bio-polysaccharide-based polymer.

In an optional embodiment of the present invention, a strongly alkaline solution is adopted to adjust the pH of the third mixed system, and further, a sodium hydroxide solution with a mass concentration of 30%-50% is adopted. It should be noted that the pH of the bio-polysaccharide-based polymer prepared by the example of the present invention is 1.0-2.0, exhibiting strong acidity. This imposes specific requirements on storage and transportation containers and makes it unsuitable for directly preparing cleaning agents. After it is adjusted to weak acidity, it can be used directly for preparation, thereby enhancing its applicability.

In the preferred embodiments of the present invention, a preparation method for a bio-polysaccharide-based polymer includes the following steps:
S1. adding polysaccharide material and the first monomer according to the proportion, then adding deionized water, introducing nitrogen, raising the temperature to 55-80°C for >0.5h, adding the first oxidant after the system is dissolved to a transparent and homogeneous state, and reacting at 55-80°C for 1-4h, so as to obtain the first mixed system;
S2. adding an alcohol solvent into the first mixed system for reaction, wherein the reaction temperature is 55-80°C and the duration is 5-30min, so as to obtain the second mixed system;
S3. adding a second monomer and a second oxidant simultaneously into the second mixed system, and reacting at 60-80°C for 2-6h, so as to obtain a third mixed system, and
S4. performing the temperature-raising reaction on the third mixed system, wherein the reaction temperature of the first temperature-raising reaction is 85-90°C and the duration is 2-6h, and the reaction temperature of the second temperature-raising reaction is 90-105°C and the duration is 0.5-2.5h, and distilling and recovering distillate during the temperature-raising reaction.

When the temperature of the reaction system reaches ≥94°C and the mass of the collected liquid exceeds the amount of the added alcohol solvent, the reaction is terminated, and when the material temperature in the reaction system drops below 50°C, the pH of the system is adjusted to 4.0-5.0 using a sodium hydroxide solution with a mass concentration of 30%-50%, so as to obtain the bio-polysaccharide-based polymer.

In the second aspect, a bio-polysaccharide-based polymer is provided in the example of the present invention, wherein the bio-polysaccharide-based polymer is prepared by the aforementioned preparation method.

According to the method of OECD TG 301B, the biodegradability percentage of bio-polysaccharide-based dispersed polymer exceeds 60% over 28 days, meeting the readily biodegradable criteria.

It should be noted that the QECD TG 301B is a biodegradability testing method widely used in the environmental field, which can help to evaluate the degradation rate and mode of chemicals in the natural environment. This method is widely used in fields such as environmental risk assessment, new chemical registration, and regulatory decision-making. The QECD TG 301B test adopts the method of adding microorganisms into a saturated solution, and evaluates the biodegradability of the tested chemicals by monitoring the oxygen consumption. In the process of testing, the concentration of dissolved oxygen in the test sample is measured periodically, so as to obtain the degradation rate and extent of the tested chemicals in a certain period of time. The preparation of test samples strictly follows prescribed procedures to avoid contamination or denaturation during the process. Additionally, the test generates minimal waste during the testing process, aligning with the principles of green testing and sustainable development.

The accuracy of QECD TG 301B test data is high, it is mainly reflected in the following aspects: data collection, recording and processing are carried out in strict accordance with the standard operating procedures of data processing, to avoid human error; all test data are reviewed to ensure the consistency and reliability of the data; and statistical methods are adopted to analyze the data to guarantee the accuracy and scientificity of the results.

In the third aspect, a cleaning agent is provided in the example of the present invention, wherein the cleaning agent includes a bio-polysaccharide-based polymer prepared by the aforementioned preparation method or the aforementioned bio-polysaccharide-based polymer.

The features and performance of the present invention are further described in detail below with reference to the examples.

### Example 1

In the present example, a phosphorus-free biodegradable bio-polysaccharide-based polymer was provided, and the preparation method therefor was as follows:
S1. 65 parts of dextrin, 5 parts of chitosan, 15 parts of maleic anhydride and 165 parts of deionized water were added according to the proportion; nitrogen was introduced during the temperature-raising reaction, and the temperature was raised to 80°C and reacted for 30 min until the system dissolved into a transparent and homogeneous state; 1 part of ceric ammonium nitrate was then added, and the reaction was continued at constant temperature for 1h, so as to obtain the first mixed system;
S2. 10 parts of isopropanol was added to the first mixed system, after reacting at constant temperature for 15min, the second mixed system was obtained;
S3. the second monomer and second oxidant were simultaneously added to the second mixed system, and the reaction was carried out at 80°C with an adding duration of 4h, so as to obtain the third mixed system. The second monomer was a mixed solution of 20 parts of acrylic acid, 10 parts of AMPS sulfonic acid, 5 parts of hydroxyethyl acrylate and 35 parts of vinyl acetate; the second oxidant was a solution prepared by dissolving 8 parts of potassium persulfate in 30 parts of deionized water;
S4. the third mixed system was subjected to a temperature-raising reaction, wherein the reaction temperature of the first temperature-raising reaction was 85°C and the duration was 2.5h; the reaction temperature of the second temperature-raising reaction was 98°C, and the duration was 1h; during the temperature-raising reaction, distillation was conducted, and the distillate was collected, and
when the temperature of the reaction system reached ≥94°C and the mass of the collected liquid exceeded 10 parts, the reaction was stopped, and when the material temperature in the reaction system dropped below 50°C, the pH of the system was adjusted to 4.0-5.0 using a sodium hydroxide solution with a mass concentration of 50%, so as to obtain the bio-polysaccharide-based polymer.

The solid content of bio-polysaccharide-based polymer was 44%-46%, exhibited an amber color with a caramel odor, and demonstrated a biodegradation rate of 74.84% within 28 days when tested according to the OECD TG 301B CO₂ Evolution Test (17^{th} July 1992) standard.

### Example 2

In the present example, a phosphorus-free biodegradable bio-polysaccharide-based polymer was provided, and the preparation method therefor was as follows:
S1. 65 parts of oxidized starch, 3 parts of Arabic gum, 10 parts of fumaric acid, 5 parts of itaconic acid and 150 parts of deionized water were added according to the proportion; nitrogen was introduced during the temperature-raising reaction, and the temperature was raised to 75°C and reacted for 40min until the system dissolved into a transparent and homogeneous state; 2 part of ferric chloride was then added, and the reaction was continued at constant temperature for 1.5h, so as to obtain the first mixed system;
S2. 10 parts of ethanol were added to the first mixed system, after reacting at constant temperature for 15min, the second mixed system was obtained;
S3. the second monomer and second oxidant were simultaneously added to the second mixed system, and the reaction was carried out at 80°C with an adding duration of 3.5h, so as to obtain the third mixed system. The second monomer was a mixed solution of 20 parts of acrylic acid, 10 parts of AMPS sulfonic acid, 5 parts of acrylamide and 5 parts of hydroxyethyl acrylate; the second oxidant was a solution prepared by dissolving 10 parts of potassium persulfate in 50 parts of deionized water;
S4. the third mixed system was subjected to a temperature-raising reaction, wherein the reaction temperature of the first temperature-raising reaction was 90°C and the duration was 2.5h; the reaction temperature of the second temperature-raising reaction was 95°C, and the duration was 1h; during the temperature-raising reaction, distillation was conducted, and the distillate was collected, and
when the temperature of the reaction system reached ≥94°C and the mass of the collected liquid exceeded 10 parts, the reaction was stopped, and when the material temperature in the reaction system dropped below 50°C, the pH of the system was adjusted to 4.0-5.0 using a sodium hydroxide solution with a mass concentration of 50%, so as to obtain the bio-polysaccharide-based polymer.

The solid content of bio-polysaccharide-based polymer was 44%-46%, exhibited an amber color with a caramel odor, and demonstrated a biodegradation rate of 62.07% within 28 days when tested according to the OECD TG 301B CO₂ Evolution Test (17^{th} July 1992) standard.

### Example 3

In the present example, a phosphorus-free biodegradable bio-polysaccharide-based polymer was provided, and the preparation method therefor was as follows:
S1. 60 parts of chitosan, 15 parts of tamarind gum, 10 parts of maleic anhydride, 10 parts of fumaric acid and 160 parts of deionized water were added according to the proportion; nitrogen was introduced during the temperature-raising reaction, and the temperature was raised to 80°C and reacted for 1h until the system dissolved into a transparent and homogeneous state; 0.5 part of titanium chloride, 0.2 part of zirconium chloride and 0.1 part of chromium chloride were then added, and the reaction was continued at constant temperature for 1h, so as to obtain the first mixed system;
S2. 15 parts of n-butanol were added to the first mixed system, after reacting at constant temperature for 10min, the second mixed system was obtained;
S3. the second monomer and second oxidant were simultaneously added to the second mixed system, and the reaction was carried out at 70°C with an adding duration of 2.5 h, so as to obtain the third mixed system. The second monomer was a mixed solution of 20 parts of vinyl acetate, 5 parts of n-butyl acrylate, 20 parts of allyl glycidyl ether and 5 parts of styrene; the second oxidant was a solution prepared by dissolving 5 parts potassium persulfate and 5 parts ammonium persulfate in 30 parts of deionized water;
S4. the third mixed system was subjected to a temperature-raising reaction, wherein the reaction temperature of the first temperature-raising reaction was 90°C and the duration was 2.5h; the reaction temperature of the second temperature-raising reaction was 97°C, and the duration was 1.5h; during the temperature-raising reaction, distillation was conducted, and the distillate was collected, and
when the temperature of the reaction system reached ≥94°C and the mass of the collected liquid exceeded 15 parts, the reaction was stopped, and when the material temperature in the reaction system dropped below 50°C, the pH of the system was adjusted to 4.0-5.0 using a sodium hydroxide solution with a mass concentration of 50%, so as to obtain the bio-polysaccharide-based polymer.

The solid content of bio-polysaccharide-based polymer was 44%-46%, exhibited an amber color with a caramel odor, and demonstrated a biodegradation rate of 69.18% within 28 days when tested according to the OECD TG 301B CO₂ Evolution Test (17^{th} July 1992) standard.

### Example 4

In the present example, a phosphorus-free biodegradable bio-polysaccharide-based polymer was provided, and the preparation method therefor was as follows:
S1. 50 parts of carboxymethyl guar gum, 15 parts of hydroxypropyl cellulose, 2 parts of carboxymethyl starch, 15 parts of fumaric acid and 110 parts of deionized water were added according to the proportion; nitrogen was introduced during the temperature-raising reaction, and the temperature was raised to 60°C and reacted for 45 min until the system dissolved into a transparent and homogeneous state; 1 part of ceric ammonium nitrate and 1 part of ammonium ferrous sulfate were then added, and the reaction was continued at constant temperature for 2h, so as to obtain the first mixed system;
S2. 25 parts of isopropanol were added to the first mixed system, after reacting at constant temperature for 5min, the second mixed system was obtained;
S3. the second monomer and second oxidant were simultaneously added to the second mixed system, and the reaction was carried out at 80°C with an adding duration of 4h, so as to obtain the third mixed system. The second monomer was a mixed solution of 20 parts of hydroxyethyl acrylate, 10 parts of vinyl acetate, 15 parts of styrene, and 5 parts of lauryl acrylate; the second oxidant was a solution prepared by dissolving 15 parts of ammonium persulfate in 25 parts of deionized water;
S4. the third mixed system was subjected to a temperature-raising reaction, wherein the reaction temperature of the first temperature-raising reaction was 88°C and the duration was 2h; the reaction temperature of the second temperature-raising reaction was 95°C, and the duration was 5h; during the temperature-raising reaction, distillation was conducted, and the distillate was collected, and
when the temperature of the reaction system reached ≥94°C and the mass of the collected liquid exceeded 25 parts, the reaction was stopped, and when the material temperature in the reaction system dropped below 50°C, the pH of the system was adjusted to 4.0-5.0 using a sodium hydroxide solution with a mass concentration of 50%, so as to obtain the bio-polysaccharide-based polymer.

The solid content of bio-polysaccharide-based polymer was 51%-53%, exhibited an amber color with a caramel odor, and demonstrated a biodegradation rate of 60.69% within 28 days when tested according to the OECD TG 301B CO₂ Evolution Test (17^{th} July 1992) standard.

### Example 5

In the present example, a phosphorus-free biodegradable bio-polysaccharide-based polymer was provided, and the preparation method therefor was as follows:
S1. 45 parts of carboxymethyl starch, 5 parts of tamarind gum, 3 parts of Arabic gum, 15 parts of maleic anhydride, 3 parts of fumaric acid and 150 parts of deionized water were added according to the proportion; nitrogen was introduced during the temperature-raising reaction, and the temperature was raised to 75°C and reacted for 40 min until the system dissolved into a transparent and homogeneous state; 1 part of ceric ammonium nitrate and 1 part of zirconium chloride were then added, and the reaction was continued at constant temperature for 1.5h, so as to obtain the first mixed system;
S2. 13 parts of methanol was added to the first mixed system, after reacting at constant temperature for 10min, the second mixed system was obtained;
S3. the second monomer and second oxidant were simultaneously added to the second mixed system, and the reaction was carried out at 78°C with an adding duration of 3h, so as to obtain the third mixed system. The second monomer was a mixed solution of 20 parts of acrylic acid, 10 parts of hydroxyethyl acrylate, 15 parts of AMPS sulfonic acid, 5 parts of n-butyl acrylate, and 10 parts of vinyl acetate; the second oxidant was a solution prepared by dissolving 8 parts of sodium persulfate in 30 parts of deionized water;
S4. the third mixed system was subjected to a temperature-raising reaction, wherein the reaction temperature of the first temperature-raising reaction was 85°C and the duration was 3h; the reaction temperature of the second temperature-raising reaction was 95°C, and the duration was 1.5h; during the temperature-raising reaction, distillation was conducted, and the distillate was collected, and
when the temperature of the reaction system reached ≥94°C and the mass of the collected liquid exceeded 13 parts, the reaction was stopped, and when the material temperature in the reaction system dropped below 50°C, the pH of the system was adjusted to 4.0-5.0 using a sodium hydroxide solution with a mass concentration of 50%, so as to obtain the bio-polysaccharide-based polymer.

The solid content of bio-polysaccharide-based polymer was 42%-44%, exhibited an amber color with a caramel odor, and demonstrated a biodegradation rate of 49.13 % within 28 days when tested according to the OECD TG 301B CO₂ Evolution Test (17^{th} July 1992) standard.

### Example 6

In the present example, a phosphorus-free biodegradable bio-polysaccharide-based polymer was provided, and the preparation method therefor was as follows:
S1. 80 parts of chitosan, 50 parts of dextrin, 5 parts of Arabic gum, 3 parts of maleic anhydride and 4 parts of itaconic acid, and 190 parts of deionized water were added according to the proportion; nitrogen was introduced during the temperature-raising reaction, and the temperature was raised to 70°C and reacted for 30 min until the system dissolved into a transparent and homogeneous state; 0.3 part of ceric ammonium nitrate and 0.6 part of ferric chloride were then added, and the reaction was continued at constant temperature for 2h, so as to obtain the first mixed system;
S2. 25 parts of tert-butanol were added to the first mixed system, after reacting at constant temperature for 15min, the second mixed system was obtained;
S3. the second monomer and second oxidant were simultaneously added to the second mixed system, and the reaction was carried out at 75°C with an adding duration of 1.5 h, so as to obtain the third mixed system. The second monomer was a mixed solution of 5 parts of AMPS sulfonic acid, 5 parts of allyl glycidyl ether, 10 parts of vinyl acetate and 5 parts of n-butyl acrylate; the second oxidant was a solution prepared by dissolving 25 parts of sodium persulfate in 40 parts of deionized water;
S4. the third mixed system was subjected to a temperature-raising reaction, wherein the reaction temperature of the first temperature-raising reaction was 88°C and the duration was 0.5h; the reaction temperature of the second temperature-raising reaction was 98°C, and the duration was 1h; during the temperature-raising reaction, distillation was conducted, and the distillate was collected, and
when the temperature of the reaction system reached ≥94°C and the mass of the collected liquid exceeded 25 parts, the reaction was stopped, and when the material temperature in the reaction system dropped below 50°C, the pH of the system was adjusted to 4.0-5.0 using a sodium hydroxide solution with a mass concentration of 50%, so as to obtain the bio-polysaccharide-based polymer.

The solid content of bio-polysaccharide-based polymer was 44%-46%, exhibited an amber color with a caramel odor, and demonstrated a biodegradation rate of 80.05% within 28 days when tested according to the OECD TG 301B CO₂ Evolution Test (17^{th} July 1992) standard.

### Example 7

In the present example, a phosphorus-free biodegradable bio-polysaccharide-based polymer was provided, and the preparation method therefor was as follows:
S1. 15 parts of starch, 1 part of degraded cellulose, 5 parts of dextrin, 90 parts of fumaric acid, 10 parts of itaconic acid and 210 parts of deionized water were added according to the proportion; nitrogen was introduced during the temperature-raising reaction, and the temperature was raised to 65°C and reacted for 50min until the system dissolved into a transparent and homogeneous state; 4 parts of ceric ammonium nitrate and 4 parts of ammonium ferrous sulfate were then added, and the reaction was continued at constant temperature for 1.5 h, so as to obtain the first mixed system;
S2. 3 parts of isopropanol were added to the first mixed system, after reacting at constant temperature for 10min, the second mixed system was obtained;
S3. the second monomer and second oxidant were simultaneously added to the second mixed system, and the reaction was carried out at 70°C with an adding duration of 3h, so as to obtain the third mixed system. The second monomer was a mixed solution of 10 parts of acrylic acid, 30 parts of AMPS sulfonic acid, 15 parts of allyl glycidyl ether and 5 parts of lauryl acrylate; the second oxidant was a solution prepared by dissolving 10 parts of sodium persulfate in 20 parts of deionized water;
S4. the third mixed system was subjected to a temperature-raising reaction, wherein the reaction temperature of the first temperature-raising reaction was 85°C and the duration was 2.5h; the reaction temperature of the second temperature-raising reaction was 100°C, and the duration was 1h; during the temperature-raising reaction, distillation was conducted, and the distillate was collected, and
when the temperature of the reaction system reached ≥94°C and the mass of the collected liquid exceeded 3 parts, the reaction was stopped, and when the material temperature in the reaction system dropped below 50°C, the pH of the system was adjusted to 4.0-5.0 using a sodium hydroxide solution with a mass concentration of 50%, so as to obtain the bio-polysaccharide-based polymer.

The solid content of bio-polysaccharide-based polymer was 44%-46%, exhibited an amber color with a caramel odor, and demonstrated a biodegradation rate of 30.61 % within 28 days when tested according to the OECD TG 301B CO₂ Evolution Test (17^{th} July 1992) standard.

### Example 8

In the present example, a phosphorus-free biodegradable bio-polysaccharide-based polymer was provided, and the preparation method therefor was as follows:
S1. 40 parts of starch, 20 parts of hydroxypropyl dextrin, 2 parts of tamarind gum, 20 parts of itaconic acid and 240 parts of deionized water were added according to the proportion; nitrogen was introduced during the temperature-raising reaction, and the temperature was raised to 50°C and reacted for 40 min until the system dissolved into a transparent and homogeneous state; 10 parts of ceric ammonium nitrate and 5 parts of zirconium chloride were then added, and the reaction was continued at constant temperature for 1.5h, so as to obtain the first mixed system;
S2. 2 parts of n-butanol were added to the first mixed system, after reacting at constant temperature for 20min, the second mixed system was obtained;
S3. the second monomer and second oxidant were simultaneously added to the second mixed system, and the reaction was carried out at 55°C with an adding duration of 7 h, so as to obtain the third mixed system. The second monomer was a mixed solution of 25 parts of acrylic acid, 70 parts of vinyl acetate, 20 parts of AMPS sulfonic acid, 35 parts of n-butyl acrylate and 10 parts of allyl glycidyl ether; the second oxidant was a solution prepared by dissolving 10 parts of ammonium persulfate and 5 parts of sodium persulfate in 90 parts of deionized water;
S4. the third mixed system was subjected to a temperature-raising reaction, wherein the reaction temperature of the first temperature-raising reaction was 75°C and the duration was 7h; the reaction temperature of the second temperature-raising reaction was 100°C, and the duration was 2h; during the temperature-raising reaction, distillation was conducted, and the distillate was collected, and
when the temperature of the reaction system reached ≥94°C and the mass of the collected liquid exceeded 2 parts, the reaction was stopped, and when the material temperature in the reaction system dropped below 50°C, the pH of the system was adjusted to 4.0-5.0 using a sodium hydroxide solution with a mass concentration of 50%, so as to obtain the bio-polysaccharide-based polymer.

The solid content of bio-polysaccharide-based polymer was 44%-46%, exhibited an amber color with a caramel odor, and demonstrated a biodegradation rate of 58.87% within 28 days when tested according to the OECD TG 301B CO₂ Evolution Test (17^{th} July 1992) standard.

### Comparative Example 1

In the present comparative example, a phosphorus-free biodegradable bio-polysaccharide-based polymer was provided, wherein it differed from Example 1 in that:
S1. 65 parts of dextrin, 5 parts of chitosan and 165 parts of deionized water were added according to the proportion; the temperature was raised to 80°C for reaction, and nitrogen was introduced during the reaction, reacted for 30 min until the system dissolved into a transparent and homogeneous state; 10 parts of isopropanol was then added, and the reaction was continued at constant temperature for 15min, so as to obtain the first mixed system;
S2. the second monomer and second oxidant were simultaneously added to the first mixed system, and the reaction was carried out at 80°C with an adding duration of 4 h, so as to obtain the second mixed system. The second monomer was a mixed solution of 20 parts of acrylic acid, 10 parts of AMPS sulfonic acid, 5 parts of hydroxyethyl acrylate and 35 parts of vinyl acetate; the second oxidant was a solution prepared by dissolving 8 parts of potassium persulfate in 30 parts of deionized water, and
S3. 15 parts of maleic anhydride were added to the second mixed system, after dissolution, 1 part of ceric ammonium nitrate was added, and the reaction was continued at constant temperature for 1h, so as to obtain the third mixed system.

The solid content of bio-polysaccharide-based polymer was 44%-46%, exhibited an amber color with a caramel odor, and demonstrated a biodegradation rate of 69.68% within 28 days when tested according to the OECD TG 301B CO₂ Evolution Test (17^{th} July 1992) standard.

### Comparative Example 2

In the present comparative example, a phosphorus-free biodegradable bio-polysaccharide-based polymer was provided, wherein it differed from Example 1 in that:
S1. no first monomer was added.

The solid content of bio-polysaccharide-based polymer was 42%-44%, exhibited an amber color with a caramel odor, and demonstrated a biodegradation rate of 78.65% within 28 days when tested according to the OECD TG 301B CO₂ Evolution Test (17^{th} July 1992) standard.

### Comparative Example 3

In the present comparative example, a phosphorus-free biodegradable bio-polysaccharide-based polymer was provided, wherein it differed from Example 1 in that:
S2. no alcohol solvent was added.

The solid content of bio-polysaccharide-based polymer was 44%-46%, exhibited an amber color with a caramel odor, and demonstrated a biodegradation rate of 72.51 % within 28 days when tested according to the OECD TG 301B CO₂ Evolution Test (17^{th} July 1992) standard.

### Comparative Example 4

In the present comparative example, a phosphorus-free biodegradable bio-polysaccharide-based polymer was provided, wherein it differed from Example 1 in that:
S3. no second monomer was added.

The solid content of bio-polysaccharide-based polymer was 32%-34%, exhibited an amber color with a caramel odor, and demonstrated a biodegradation rate of 80.98% within 28 days when tested according to the OECD TG 301B CO₂ Evolution Test (17^{th} July 1992) standard.

### Comparative Example 5

In the present comparative example, a phosphorus-free biodegradable bio-polysaccharide-based polymer was provided, wherein it differed from Example 1 in that:
S3. the third mixed system was subjected to a temperature-raising reaction, wherein the reaction temperature was 98°C and the duration was 3.5h.

The solid content of bio-polysaccharide-based polymer was 44%-46%, exhibited an amber color with a caramel odor, and demonstrated a biodegradation rate of 70.81 % within 28 days when tested according to the OECD TG 301B CO₂ Evolution Test (17^{th} July1992) standard.

### Test Example 1

In the present test example, the bio-polysaccharide-based polymers prepared in Example 1 and Comparative Examples 1-5, as well as commercially available products PAA, PMA/AA, and PAA/AMPS, were subjected to biodegradation testing, wherein the test is based on OECD 301B, and the specific test method was as follows. Based on the OECD TG 301B CO₂ Evolution Test (17^{th} July 1992) standard, a known concentration of the test substance (10mg/L-20mg/L) was used as the sole organic carbon source in a fixed volume of inoculated inorganic medium. The test medium was aerated with carbon dioxide-free air at a controlled rate under dark or diffused light conditions. The degradation rate was calculated by measuring the amount of carbon dioxide produced within 28 days. An inorganic carbon analyzer was required to measure the inorganic carbon content within 28 days, and a sodium hydroxide solution absorption method was adopted to calculate the cumulative carbon dioxide production. The entire test process adopted sodium benzoate as the positive control group, and a blank control experiment was further conducted. Finally, the biodegradation rate within 28 days of the samples was determined according to the above test method, and the results are shown in Table 1.

**Table 1**

| Sample | Biodegradation rate within 28 days/% | Dispersing ability for iron oxide/% | Dispersing ability for kaolinite/% |
|---|---|---|---|
| Example 1 | 74.48 | 56.7 | 27.3 |
| Comparison Example 1 | 69.68 | 73.4 | 56.7 |
| Comparison Example 2 | 80.98 | 80.9 | 60.8 |
| Comparison Example 3 | 72.51 | 60.4 | 35.9 |
| Comparison Example 4 | 78.65 | 64.5 | 40.8 |
| Comparison Example 5 | 70.81 | 58.6 | 37.1 |
| PAA | 2.38 | 73.2 | 48.8 |
| PMA/AA | 6.12 | 78.9 | 61.7 |
| PAA/AMPS | 2.16 | 66.8 | 36.2 |

As shown in Table 1, the bio-polysaccharide-based polymer prepared in Example 1 exhibits significantly better biodegradability than commercially available products PAA, PMA/AA, and PAA/AMPS. Furthermore, the biodegradation rates of the bio-polysaccharide-based polymer produced in Example 1 and Comparative Examples 1-5 all meet the readily biodegradable requirements specified in OECD 301B.

### Test Example 2

In the present test example, the hard water resistance of the bio-polysaccharide-based polymers prepared in Example 1 and Comparative Examples 1-5, as well as commercially available products PAA, PMA/AA, and PAA/AMPS, was tested. The calcium hardness in water (calculated as CaCl₂) was measured, and the specific test methods were as follows.

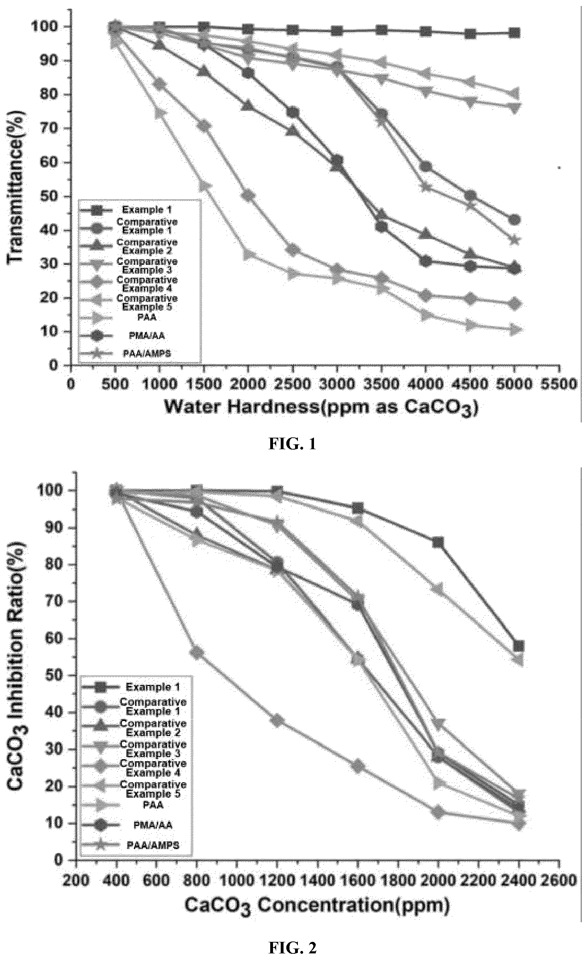

1g/L polymer solution was prepared, to which varying amounts of CaCl₂ were added. The solution pH was adjusted to 9.0-10.0, so as to obtain a series of mixed solutions with equal pH, containing 1g/L polymer and different CaCl₂ concentrations (calculated as calcium carbonate). The solutions were mixed uniformly and allowed to stand. The calcium ion concentrations in the prepared mixed solutions were 500ppm, 1000ppm, 1500ppm, 2000ppm, 2500ppm, 3000ppm, 3500ppm, 4000ppm, 4500ppm, and 5000ppm, respectively. After bubbles disappeared from the solutions, their transparency was measured using an ultraviolet spectrophotometer to characterize turbidity, wherein the model of the test instrument was Model 722, and the test parameters were set as: 1 cm quartz cuvette, test wavelength of 595 nm, with distilled water serving as the 100% transmittance reference. The hard water resistance of the products was comprehensively evaluated based on the curves of transparency with hardness. Higher transparency indicates lower turbidity and better hard water resistance. The test results are shown in FIG. 1.

It should be noted that the transparency level reflects the turbidity of the solution. The higher the transparency, the lower the turbidity, indicating the better the hard water resistance, and vice versa. As can be seen from FIG. 1, Example 1 demonstrates the best hard water resistance, significantly outperforming the commercially available products PAA, PMA/AA, and PAA/AMPS. This is mainly attributed to the unique molecular structure of polysaccharides and their grafting of hydrophilic and hydrophobic monomers. Combined with Comparative Examples 1-5, the results show that changing the polymerization sequence, not introducing the first monomer, not introducing the second monomer, not using alcohol solvent but changing S3 process all affect the hard water resistance of the products. In these examples, the omission of the second monomer in Comparative Example 4 has the greatest impact on the hard water resistance of the product, while the process modification in Comparative Example 5 has the least impact on the hard water resistance of the product.

### Test Example 3

Sodium carbonate is frequently introduced as the main alkaline filler in detergent formulations. To better evaluate the dispersing ability for calcium carbonate scale of the polymers, in the present test example, the inhibition ability for calcium carbonate of the bio-polysaccharide-based polymers prepared in Example 1 and Comparative Examples 1-5, as well as commercially available products PAA, PMA/AA, and PAA/AMPS, was tested. The test method was performed according to "USE OF POLYSULFONATED POLYMER ALCOGUARD 4160 IN DETERGENTS FOR AUTOMATIC DISHWASHERS" by Wang Qiang and Zhang Zhiguo in the "SPECIAL ISSUE ON TECHNOLOGY AND MARKET OF HOUSEHOLD AND COMMERCIAL DISHWASHER DETERGENTS". The model of the spectrophotometer was Model 722, and the test parameters were set as: 1 cm quartz cuvette, test wavelength of 595 nm, with distilled water serving as the 100% transmittance reference. The specific test method was as follows. Polymer solutions were prepared, and varying amounts of CaCl₂ were added, so as to obtain a series of mixed solutions with a polymer concentration of 10g/L and different CaCl₂ contents (calculated as calcium carbonate). An equimolar amount of sodium carbonate solution was then added to each solution. After thorough mixing, the transmittance was measured by an ultraviolet spectrophotometer to indicate turbidity, and the inhibition ability for calcium carbonate was ultimately represented by the transmittance. The calcium ion concentrations (calculated as calcium carbonate) in the prepared mixed solutions were 400ppm, 800ppm, 1200ppm, 1600ppm, 2000ppm, and 2400ppm, respectively. The relevant test results are shown in FIG. 2.

As can be seen from FIG. 2, the inhibition ability for calcium carbonate scale in Example 1 is better than that of the commercially available products PAA, PMA/AA, and PAA/AMPS. This is mainly attributed to the polyhydroxy functional group characteristics of polysaccharides and their grafting of hydrophilic and hydrophobic monomers. Combined with Comparative Examples 1-5, the results show that changing the polymerization sequence, not introducing the first monomer, not introducing the second monomer, not using alcohol solvent but changing S3 process all affect the inhibition ability for the calcium carbonate scale of the products. In these examples, the omission of the second monomer in Comparative Example 4 has the greatest impact on the inhibition ability for the calcium carbonate scale of the product, while the process modification in Comparative Example 5 has the least impact on the inhibition ability for the calcium carbonate scale of the product.

### Test Example 4

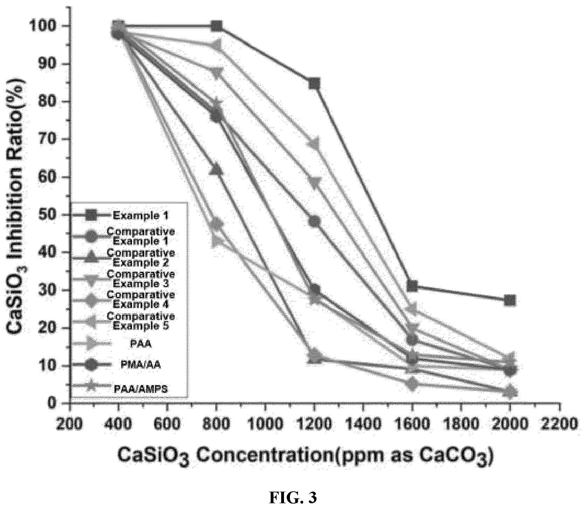

In addition to sodium carbonate, sodium silicate is often introduced into the detergent formulation as an ancillary detergent to improve the cleaning performance. In the present test example, the inhibition ability for sodium silicate of the bio-polysaccharide-based polymers prepared in Example 1 and Comparative Examples 1-5, as well as commercially available products PAA, PMA/AA, and PAA/AMPS, was tested. The test method was performed according to the test method of Test Example 3, and the model of the spectrophotometer was Model 722. The test parameters were set as: 1 cm quartz cuvette, test wavelength of 595 nm, with distilled water serving as the 100% transmittance reference. The specific test method was as follows: Polymer solutions were prepared, and varying amounts of CaCl₂ were added, so as to obtain a series of mixed solutions with a polymer concentration of 10g/L and different CaCl₂ contents (calculated as calcium carbonate). An equimolar amount of sodium silicate solution was then added to each solution. After thorough mixing, the transmittance was measured by an ultraviolet spectrophotometer to indicate the turbidity, and the inhibition ability for calcium carbonate was ultimately represented by the transmittance. The calcium ion concentrations (calculated as calcium carbonate) in the prepared mixed solutions were 400ppm, 800ppm, 1200ppm, 1600ppm, and 2000ppm, respectively. The relevant test results are shown in FIG. 3.

As can be seen from FIG. 3, the inhibition ability for calcium silicate scale in Example 1 is better than the hard water resistance of the commercially available products PAA, PMA/AA, and PAA/AMPS. Like calcium carbonate scale, this is mainly attributed to the polyhydroxy functional group characteristics of polysaccharides and their grafting of hydrophilic and hydrophobic monomers. Combined with Comparative Examples 1-5, the results show that changing the polymerization sequence, not introducing the first monomer, not introducing the second monomer, not using alcohol solvent and changing S3 process all affect the inhibition ability for the calcium silicate scale of the products. In these examples, the omission of the second monomer in Comparative Example 4 has the greatest impact on the inhibition ability for the calcium silicate scale of the product, while the process modification in Comparative Example 5 has the least impact on the inhibition ability for the calcium silicate scale of the product.

### Test Example 5

In the present test example, the dispersing ability for iron oxide of the bio-polysaccharide-based polymer prepared in Example 1 and Comparative Examples 1-5, as well as commercially available products PAA, PMA/AA, and PAA/AMPS, was tested. The iron oxide dispersion test was conducted according to "EVALUATION OF DISPERSING ABILITY FOR IRON DEPOSIT OF COOLING WATER TREATMENT AGENTS" by Lu Jianmin in INDUSTRIAL WATER TREATMENT, Issue 06, 1991. The dispersibility for iron was characterized by the transmittance of the solution, where lower transmittance indicated better dispersibility for iron. The model of the spectrophotometer was 722, and the test parameters were set as: 1 cm quartz cuvette, test wavelength of 420 nm, with distilled water serving as the 100% transmittance reference. The specific test method was as follows. A solution was prepared with a calcium ion concentration of 160mg/L (calcium chloride was used as reagent, calculated as calcium carbonate), Fe²⁺ concentration of 10mg/L (ferrous sulfate heptahydrate was used as reagent), and pH=9.0 (adjusted with sodium tetraborate). The test polymer was added at 4mg/L, stirred for 15 min, and then allowed to stand in a 50°C water bath for 5 h. The transmittance of the supernatant solution was measured to indicate the turbidity, so that the inhibition and dispersing ability for iron oxide of different polymers can be evaluated. The corresponding test results are shown in Table 1.

From the transmittance data in Table 1, it can be seen that Example 1 exhibits the lowest transmittance value and the highest turbidity, indicating the best dispersing ability for iron oxide, which is superior to commercially available products PAA, PMA/AA, and PAA/AMPS. This is mainly attributed to the polysaccharide molecular structure and the second mixed monomer. The transmittance values of Comparative Examples 1 and 2 show that changes in the polymerization sequence and the second monomer significantly affect the dispersing ability for iron oxide, resulting in performance inferior to commercially available products PAA, PMA/AA, and PAA/AMPS. Combined with Comparative Examples 3-5, the results demonstrate that modifications in the alcohol solvent, second monomer, and S3 process parameters result in a bio-polysaccharide-based polymer with the dispersing ability for iron oxide comparable to commercially available product PAA/AMPS.

### Test Example 6

In the present test example, the dispersing ability for kaolinite of the bio-polysaccharide-based polymers prepared in Example 1 and Comparative Examples 1-5, as well as commercially available products PAA, PMA/AA, and PAA/AMPS, was tested. The test referenced a third-party client's method, and the test method was spectrophotometry. By testing the transmittance in the supernatant liquid, the dispersing ability for kaolinite of the polymer was evaluated. The model of the spectrophotometer was Model 722, and the test parameters were set as: 1 cm quartz cuvette, test wavelength of 420 nm, with distilled water serving as the 100% transmittance reference. The specific tests were as follows: at room temperature, 0.1% kaolinite, 80ppm calcium ions (calculated by calcium ion), 150ppm bicarbonate ions (calculated by bicarbonate ion), and 20ppm polymer were mixed and stirred for 10min, and left standing at room temperature for 4h. The transmittance of the supernatant liquid of the solution was measured to evaluate the dispersing ability for kaolinite, where lower transmittance indicated better dispersing ability for kaolinite. The corresponding test results are shown in Table 1.

From the transmittance data in Table 1, it can be seen that Example 1 exhibits the lowest transmittance value and the highest turbidity, indicating the best dispersing ability for kaolinite, which is superior to commercially available products PAA, PMA/AA, and PAA/AMPS. This is mainly attributed to the polysaccharide structure and the second monomer. The transmittance values of Comparative Examples 1 and 2 show that changes in the polymerization sequence and the second monomer significantly affect the dispersing ability for kaolinite, resulting in performance inferior to commercially available products PAA, PMA/AA, and PAA/AMPS. Combined with Comparative Examples 3-5, the results demonstrate that modifications in the alcohol solvent, second monomer, and S3 process parameters result in a polymer with the dispersing ability for kaolinite better than commercially available products PAA, PMA/AA, and PAA/AMPS.

### Test Example 7

In the present test example, the bio-polysaccharide-based polymers prepared in Example 1 and Comparative Examples 1-5, as well as commercially available products PAA, PMA/AA, and PAA/AMPS, were prepared into laundry detergent according to the laundry detergent formulation, and their detergency ability was tested. The corresponding laundry detergent formulation is shown in Table 2:

**Table 2**

| Ingredient | Mass Percentage / % |
|---|---|
| Polyethoxylated fatty alcohol (with an average EO adduct number of 9) | 4 |
| Sodium ethoxylated alkyl sulfate (active basis) | 2 |
| Dodecylbenzene sulfonic acid (active basis) | 8 |
| Triethanolamine (active basis) | 0.5 |
| Anhydrous sodium citrate (active basis) | 0.5 |
| Polymer (active basis) | 2 |
| Water | QS to 100 |

The detergency test was conducted according to GB/T 13174-2008. A vertical detergency machine was used for the experiment with a same-machine same-group comparison. The usage of detergent was 2g/cylinder, the usage of washing water was 1L/cylinder, washing temperature was 30°C, water hardness was 250ppm (Ca: Mg = 3: 2), and washing duration was 20 min. The test fabric was 6×6 cm cotton cloth with 4 pieces per cylinder. According to the standard, the test of twenty wash cycles was performed, and the whiteness and combustion ash of the cotton pieces were tested. The detergency and anti-redeposition ability of each sample were compared by calculating the final whiteness retention and ash deposition. The corresponding test results are shown in Table 3:

**Table 3**

| Sample | Whiteness retention (%) | Ash deposition (%) |
|---|---|---|
| Example 1 | 93.52 | 0.8899 |
| Comparison Example 1 | 91.92 | 0.9455 |
| Comparison Example 2 | 93.14 | 1.0657 |
| Comparison Example 3 | 92.09 | 1.0211 |
| Comparison Example 4 | 90.08 | 1.0309 |
| Comparison Example 5 | 90.81 | 0.8953 |
| PAA | 92.03 | 0.9066 |
| PMA/AA | 92.24 | 0.8934 |
| PAA/AMPS | 91.85 | 0.9004 |

According to the evaluation method of GB/T 13174-2008, higher whiteness retention and less ash deposition indicate better detergency ability and better anti-redeposition ability of the dispersant in the laundry detergent. As can be seen from Table 3, Example 1 shows the highest whiteness retention and the lowest ash deposition, demonstrating that its detergency ability and anti-redeposition ability outperform commercially available products PAA, PMA/AA, and PAA/AMPS. Combined with Comparative Examples 1-4, it reveals that changing the preparation process, including the polymerization sequence, the alcohol solvent, the first monomer, and the second monomer, the prepared laundry detergents have inferior detergency ability compared to the commercially available products PAA, PMA/AA, and PAA/AMPS. Combined with Comparative Example 5, it reveals that adjusting the process parameters in S3, the prepared laundry detergents have better detergency ability compared to the commercially available products PAA, and PAA/AMPS.

### Test Example 8

In the present test example, the bio-polysaccharide-based polymers prepared in Example 1 and Comparative Examples 1-5, as well as commercially available products PAA, PMA/AA, and PAA/AMPS, were prepared into dishwashing powder according to the dishwashing powder formulation, and their detergency ability was tested. The corresponding dishwashing powder formulation is shown in Table 4:

**Table 4**

| Ingredient | Mass Percentage / % |
|---|---|
| Sodium citrate | 30 |
| Sodium perborate | 5 |
| Tetraacetylethylenediamine (TAED) | 2 |
| Sodium disilicate | 25 |
| Nonionic low-foaming surfactant LF8350 | 2 |
| Protease | 0.5 |
| Amylase | 0.5 |
| Polymer | 6 (active content) |
| Sodium carbonate | QS to 100 |

The standard washing mode of Midea 3905Pro automatic dishwasher was used. With reference to the test method for the detergency performance in GB 38383-2019 "LIMITS AND GRADES OF ENERGY AND WATER EFFICIENCY FOR DISHWASHERS", tableware was washed with the dishwashing powders with the above formulations, then a score was conducted to compare the detergency performance of dishwashing powders prepared by different dispersing polymers. The corresponding test results are shown in Table 5:

**Table 5**

| Sample | Score |
|---|---|
| Example 1 | 4.30 |
| Comparison Example 1 | 3.83 |
| Comparison Example 2 | 3.18 |
| Comparison Example 3 | 3.91 |
| Comparison Example 4 | 2.36 |
| Comparison Example 5 | 4.10 |
| PAA | 3.74 |
| PMA/AA | 3.80 |
| PAA/AMPS | 4.20 |

According to the evaluation method for detergency performance in GB 38383-2019 "LIMITS AND GRADES OF ENERGY AND WATER EFFICIENCY FOR DISHWASHERS", the detergency performance of formulations prepared with different dispersants was scored based on the residual food area on tableware after testing, wherein the score is 0-5. Higher scores indicate better detergency performance of the formulation and corresponding better effect of the dispersant. As can be seen from Table 5, Example 1 shows the highest score, demonstrating that its detergency effect outperforms commercially available products PAA, PMA/AA, and PAA/AMPS. Combined with Comparative Example 1, Comparative Example 2, and Comparative Example 4, it is revealed that changing the polymerization sequence, the first monomer and the second monomer, the prepared dishwashing powder has an inferior detergency effect. Combined with Comparative Examples 3 and 5, it is revealed that modifying the alcohol solvent and the process parameters in S3, the detergency effect of the prepared dishwashing powder is comparable to commercially available products PAA, PMA/AA and PAA/AMPS.

To sum up, the preparation method for a bio-polysaccharide-based polymer provided by the present invention has a wide source of raw materials, wherein the raw materials are easily accessible and renewable. By employing diverse saccharides as substrates, the ultimately prepared bio-polysaccharide-based polymer are not only phosphorus-free and safe, but also possesses biodegradability as well as other functional properties, demonstrating resistance to hard water, good dispersing ability for various types of inorganic scales, iron oxides as well as kaolinite, thus making it suitable for making cleaning agents. The present preparation method belongs to a novel preparation process, and in the present method, a unique dual-initiation mode and an alcohol-water environment are employed, and a one-pot method is adopted for synthesis, so that no waste liquid, waste residue, or waste gas is generated. The whole preparation process is safe, environmentally friendly, easier to control, thus easily realizing industrial production.

The above are only preferred examples of the present invention and are not intended to limit the present invention, and for those skilled in the art, the present invention may have various modifications and changes. Any modifications, equivalent substitutions and improvements made within the spirit and principles of the present invention shall be included in the scope of protection of the present invention.

### Industrial Practicability

According to the preparation method of the bio-polysaccharide-based polymer in the present invention, the polysaccharide material, the first monomer and the first oxidant are reacted, so as to obtain the first mixed system; the alcohol solvent is added into the first mixed system for reaction, so as to obtain the second mixed system; the second monomer and the second oxidant are added into the second mixed system for reaction, so as to obtain the third mixed system; the temperature-raising reaction is performed on the obtained third mixed system, so as to obtain the bio-polysaccharide-based polymer. The raw materials used are diverse saccharides as substrates so that the ultimately prepared bio-polysaccharide-based polymer are not only phosphorus-free and safe, but also possesses biodegradability as well as other functional properties, wherein the other functional properties mainly reflected in the resistance to hard water, good dispersing ability for various types of inorganic scales, iron oxides as well as kaolinite, making it suitable for use in the production of cleaning agents. The present preparation method belongs to a novel preparation process, it adopts a unique dual-initiation mode and alcohol-water environment, and the one-pot method is adopted for synthesis, so that no waste liquid, waste residue, or waste gas is generated. The whole preparation process is safe, environmentally friendly, and easier to control, thus easily realizing industrial production.

In addition, it can be understood that the bio-polysaccharide-based polymer as well as the preparation method therefor and the use thereof provided by the examples of the present invention are reproducible and can be used in various industrial applications. For example, the bio-polysaccharide-based polymer as well as the preparation method therefor and the use thereof provided by the examples of the present invention can be used in the technical field of polymers.

## Claims

1. A preparation method for a bio-polysaccharide-based polymer, **characterized in that** the preparation method comprises following steps:
reacting a polysaccharide material, a first monomer and a first oxidant at a reaction temperature of 55-80°C with a duration of 1-4h to obtain a first mixed system; adding an alcohol solvent into the first mixed system for reaction at a reaction temperature of 55-80°C with a duration of 5-30min to obtain a second mixed system; adding a second monomer and a second oxidant into the second mixed system for reaction at a reaction temperature of 60-80°C with a duration of 2-6h to obtain a third mixed system; performing a temperature-raising reaction on the third mixed system, so as to obtain the bio-polysaccharide-based polymer, wherein
according to a part by mass, a usage ratio of the polysaccharide material, the first monomer and the first oxidant is (50-120): (10-80): (0.1-5); a usage ratio of the second monomer and the second oxidant is (30-150): (1-20), and
the temperature-raising reaction comprises a first temperature-raising reaction and a second temperature-raising reaction, wherein a reaction temperature of the first temperature-raising reaction is 85-90°C, and a duration is 2-6h; and a reaction temperature of the second temperature-raising reaction is 90-105°C and a duration is 0.5-2.5h.

2. The preparation method according to claim 1, wherein the polysaccharide material is selected from at least one of a polysaccharide and/or a polysaccharide derivative;
the polysaccharide is selected from at least one of starch, cellulose, guar gum, Arabic gum, tamarind gum, chitosan and dextrin, and
the polysaccharide derivative is selected from at least one of hydroxypropyl starch, carboxymethyl starch, hydroxypropyl cellulose and carboxymethyl guar gum.

3. The preparation method according to claim 1, wherein the first monomer is selected from at least one of maleic acid, maleic anhydride, fumaric acid and itaconic acid.

4. The preparation method according to claim 1, wherein the first oxidant is a metal salt, and a metal ion of the first oxidant is selected from at least one of Fe²⁺, Fe³⁺, Ti³⁺, Zr³⁺, Cr³⁺ and Ce⁴⁺.

5. The preparation method according to claim 1, wherein according to the part by mass, a usage of the alcohol solvent is 5-50 parts, and
the alcohol solvent is selected from at least one of methanol, ethanol, isopropanol, n-butanol and tert-butanol.

6. The preparation method according to claim 1, wherein the second monomer is selected from at least one of a hydrophilic monomer and/or a hydrophobic monomer;
the hydrophilic monomer is selected from at least one of acrylic acid, AMPS sulfonic acid, acrylamide and hydroxyethyl acrylate, and
the hydrophobic monomer is selected from at least one of vinyl acetate, n-butyl acrylate, allyl glycidyl ether, styrene and lauryl acrylate.

7. The preparation method according to claim 1, wherein the second oxidant is a peroxide, preferably a persulfate.

8. The preparation method according to claim 1, wherein after the third mixed system is subj ected to the temperature-raising reaction, a liquid is collected; and when a mass of the collected liquid exceeds an amount of the added alcohol solvent, the reaction is terminated, and
when a material temperature in the third mixed system is <50°C, a pH of the third mixed system is adjusted to 4.0-5.0, so as to obtain the bio-polysaccharide-based polymer.

9. A bio-polysaccharide-based polymer, **characterized in that** the bio-polysaccharide-based polymer is prepared by the preparation method according to any one of claims 1-8.

10. A cleaning agent, **characterized in that** the cleaning agent comprises the bio-polysaccharide-based polymer prepared by the preparation method according to any one of claims 1-8 or the bio-polysaccharide-based polymer according to claim 9.
